# EUROPÄISCHE PATENTSCHRIFT

(11) **EP 0 716 781 B1**
(45) Veröffentlichungstag und Bekanntmachung des Hinweises auf die Patenterteilung: **20.05.1998**
(21) Anmeldenummer: 94922840.7
(22) Anmeldetag: 04.08.1994
(51) Int. Cl.: H02P 7/00, F02D 41/20, H02H 7/08

(54) **VORRICHTUNG ZUM BETREIBEN EINES VERBRAUCHERS IN EINEM FAHRZEUG**
DEVICE FOR OPERATING A POWER CONSUMER IN A VEHICLE
DISPOSITIF PERMETTANT D'ACTIONNER UN CONSOMMATEUR DE COURANT DANS UN VEHICULE

(30) Priorität: 04.09.1993 DE 4329919
(43) Veröffentlichungstag der Anmeldung: 19.06.1996
(73) Patentinhaber: ROBERT BOSCH GMBH, 70442 Stuttgart (DE)
(72) Erfinder: BOLL, Leonhard, D-71735 Eberdingen (DE); MÜLLER, Klaus, D-71679 Asperg (DE)
(86) Internationale Anmeldenummer: DE9400903
(87) Internationale Veröffentlichungsnummer: WO9507572

(56) Entgegenhaltungen:
- EP-A- 0 060 331
- DE-A- 3 625 091
- DE-A- 3 936 484
- DE-A- 4 038 199
- US-A- 5 218 339
- ELEKTRONIK, Bd.42, Nr.13, 29. Juni 1993, MUNCHEN DE Seiten 86 - 90 BUCKSCH,W ET.AL 'Direkter Relais-Erzatz,Monolithischer H-Brückentreiber mit Schutz-und Diagnoseschaltungen.'

## Beschreibung

### Stand der Technik

Die Erfindung betrifft eine Vorrichtung zum Betreiben eines Verbrauchers in einem Fahrzeug gemäß den Oberbegriffen der unabhängigen Patentansprüche.

Eine derartige Vorrichtung ist aus der DE-OS 36 25 091 (US-PS 4 951 188) bekannt. Dort wird eine Endstufe in Brückenschaltung mit vier Schaltelementen vorgeschlagen, wobei der Strom durch den im Brückendiagonalzweig angeordneten Verbraucher erfaßt und mit vorgegebenen Schwellwerten verglichen wird. Überschreitet der Strom durch den Verbraucher einen vorgegebenen Maximalwert, so wird ein Kurzschluß im Bereich des Verbrauchers angenommen und die Endstufe derart abgeschaltet, daß sich ein Einschalttastverhältnis von 1% zur Durchführung eines Notlaufbetriebs ergibt. Durch diese Vorgehensweise wird selbst bei kurzzeitigen Störungen, die beispielsweise durch Störstrahlung entstehen können, die Endstufe abgeschaltet und ein Notbetrieb eingeleitet. Dadurch wird die Verfügbarkeit der Vorrichtung eingeschränkt.

Aus der EP-A 60 331 ist eine Vorrichtung zum Betreiben eines Verbrauchers in einem Fahrzeug bekannt, mit wenigstens zwei Schaltelementen (T1 bis T4), welche durch Ansteuersignale betätigt werden und den Stromfluß durch den Verbraucher beeinflussen. Ferner wird beim Gegenstand der EP-A 60 331 der Strom durch jedes Schaltelement erfaßt und jeweils einzeln auf das Überschreiten eines vorgegebenen Wertes überwacht. Wird ein Überstrom erkannt, so wird der zugeordnete Transistor bis zu Beginn eines neuen Einschaltimpulses gesperrt. Ein Abschalten der gesamten Endstufe erfolgt dann, wenn der Kurzschluß über längere Zeit besteht. Dazu wird der Strom durch den Verbraucher erfaßt, mit einem vorgegebenen Sollwert verglichen und bei Überschreiten eines Grenzwertes durch den Ausgang eines die Differenz zwischen Soll- und Istwert integrierenden Integrators der Gleichstromsteller abgeschaltet. Bei kurzzeitigen Störungen ist daher durch das Abschalten des zugeordneten Schaltelements die Verfügbarkeit der Vorrichtung eingeschränkt.

Es ist daher Aufgabe der Erfindung, eine Vorrichtung zum Betreiben eines Verbrauchers anzugeben, bei der die Verfügbarkeit insbesondere im Zusammenhang mit kurzzeitigen Störungen verbessert wird, ohne daß die Betriebssicherheit der Vorrichtung beeinträchtigt wird.

Gemäß einem zweiten Aspekt der Erfindung soll die Vorrichtung zum Betreiben eines Verbrauchers derart ausgestaltet werden, daß eine Integration der gesamten Vorrichtung in einem Bauteil und dessen Kopplung mit einem Mikrocomputer zur Ansteuerung eines elektrischen Verstellmotor in Verbindung mit der Einstellung eines Leistungsstellgliedes einer Brennkraftmaschine, wie eine Drosselklappe oder eine Dieseleinspritzpumpe, ermöglicht wird.

Die Aufgabe wird durch die kennzeichnenden Merkmale der unabhängigen Patentansprüche gelöst.

### Vorteile der Erfindung

Durch die erfindungsgemäße Vorgehensweise werden kurze Störungen im Bereich einer Vorrichtung zum Betreiben eines Verbrauchers erkannt, sie führen jedoch nicht zwangsläufig zur Betriebsbeeinträchtigung, so daß die Verfügbarkeit der Vorrichtung erheblich verbessert wird.

Besonders vorteilhaft ist, daß der Strom durch jedes Schaltelement der Vorrichtung erfaßt und auf Überschreiten eines vorgegebenen Maximalwertes überprüft wird.

Mit Überschreiten des Maximalstroms wird ein Zeitglied gestartet und erst dann ein Fehler erkannt, wenn diese Überschreitung eine vorgegebene Zeit lang andauert. Dadurch führen kurzzeitige Störungen nicht zur Abschaltung der Vorrichtung. Die Fehlererkennung erfolgt unabhängig von den getakteten Ansteuersignal.

Dadurch werden auch Fehler erkannt, wenn das Ansteuersignal ständig High- oder Low-Pegel aufweist.

Vorteilhaft ist ferner, daß durch Zählen der erkannten kurzen Störungen und durch Fehlerreaktion bei einer vorgegebenen Anzahl erkannter Störungen die Betriebssicherheit der Vorrichtung nicht beeinträchtigt wird.

In diesem Zusammenhang ist ferner vorteilhaft, daß strombegrenzende Mittel vorgesehen sind, welche den Strom durch das jeweilige Schaltelement auf einen vorgegebenen Maximalwert begrenzen, so daß eine schnelle Reaktion auch bei kurzzeitigen Störungen erfolgt, die zwar ungewollte Betriebszustände vermeidet, die Vefügbarkeit der Vorrichtung jedoch nicht einschränkt, während eine längerfristige Überprüfung durch Erfassung der Störungen und durch Zählen der erkannten Störungen im länger andauernden Fehlerfall und/oder durch die Zeitbedingung die Betriebssicherheit sicherstellt.

Besonders vorteilhaft ist bei einer getakteten Ansteuerung, daß das während eines Ansteuerimpulses als fehlerhaft erkannte Schaltelement mit dem nächsten Ansteuerimpuls wiedereingeschaltet wird, wenn der Fehlerzähler den vorbestimmten Zählerstand nicht erreicht hat.

Ein Abwärtszählen des Fehlerzählers bei korrekt arbeitenden Schaltelementen führt in vorteilhafter Weise dazu, daß verteilte Fehler, welche zu verschiedenen Zeitpunkten während der Betriebsdauer des Systems auftreten, nicht zu einem Abschalten führen.

Durch den vorteilhaften Aufbau der Ansteuervorrichtung wird eine Integration in ein Standard IC-Gehäuse ermöglicht, ohne bezüglich des Funktionsumfangs Einschränkungen vornehmen zu müssen. Dies führt zu einem sehr preiswerten und zuverlässigen Bauteil.

Besonders vorteilhaft ist neben der oben skizzierten Stromüberwachung mit den vorgesehenen Reaktionsmaßnahmen eine Ergänzung mit weiteren Schutzmechanismen wie ein Unterspannungs-, Überspannungs-, Übertemperaturschutz und/oder einer Überwachung der Spannung an der Ladungspumpe der zur Versorgungsspannung schaltenden Schaltelementen.

Weiter vorteilhaft ist, daß ein Mikrocomputer unter bestimmten Voraussetzungen eine als defekt erkannte Ansteuervorrichtung wieder einschalten kann, wobei der Fehlerzähler zurückgesetzt wird. Der Mikrocomputer kann im Fehlerfall dann versuchen, die Endstufe einige Male wieder zu starten.

Bei einer angenommen Taktfrequenz des Rechners von 25 kHz ist der Fehlerzähler nach 400 mikrosec. voll, wenn der Zähler z.B. bis 10 zählt. Dies bedeutet, daß bei einem vorübergehenden Fehlerfall (z.B. EMV) im msec-Bereich der Zähler sofort voll wird. Daher ist es sinnvoll, daß der Mikrocomputer ein- bzw. mehrmals versucht, die Endstufe wieder zu starten, indem er den Fehlerzähler zurücksetzt. Diese Vorgehensweise hat sich als äußerst vorteilhaft erwiesen.

Besondere Vorteile ergeben sich aus der erfindungsgemäßen Vorgehensweise bei der Anwendung zur Ansteuerung eines Gleichstrommotors oder eines Schrittmotors zur Betätigung eines Leistungsstellelements einer Brennkraftmaschine.

Weitere Vorteile ergeben sich aus der nachfolgenden Beschreibung von Ausführungsformen und aus den abhängigen Ansprüchen.

### Zeichnung

Die Erfindung wird nachstehend anhand der in der Zeichnung dargestellten Ausführungsformen näher erläutert. Dabei zeigt Figur 1 ein Übersichtsblockschaltbild eines mit der erfindungsgemäßen Vorrichtung ausgestatten Steuersystems, während in Figur 2 ein detaillierteres Blockschaltbild der erfindungsgemäßen Vorrichtung im Rahmen eines ersten, in Figur 3 im Rahmen eines zweiten Ausführungsbeispiel dargestellt ist.

### Beschreibung von Ausführungsformen

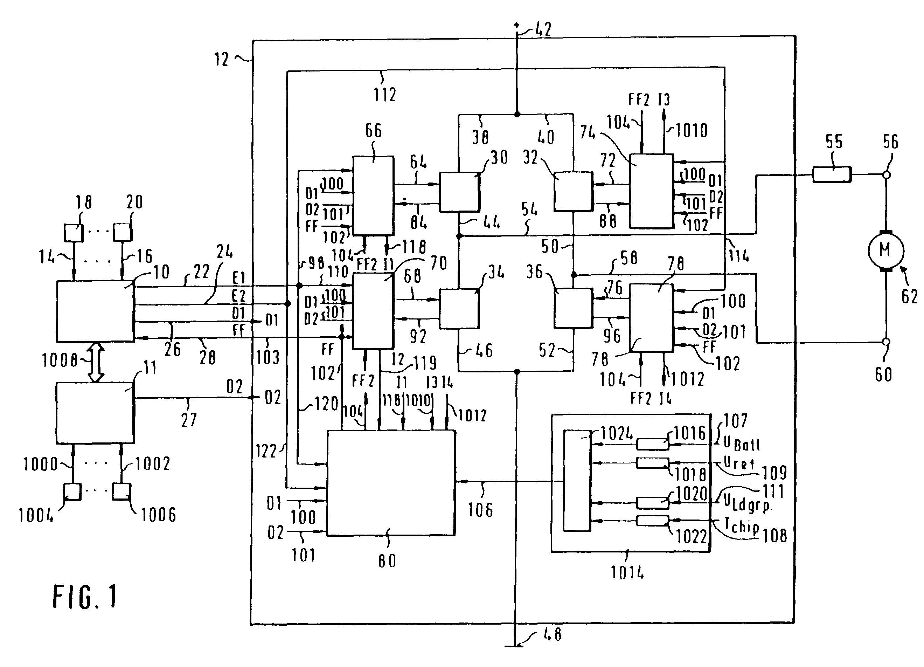

Figur 1 zeigt einen Mikrocomputer 10 sowie eine Vorrichtung 12 zum Betreiben eines Verbrauchers 62. Der Mikrocomputer 10 verfügt über die Eingangsleitungen 14 bis 16, die ihn mit Meßeinrichtungen 18 bis 20 verbinden. Eine erste Ansteuerleitung 22 und eine zweite Ansteuerleitung 24 verbinden den Mikrocomputer 10 mit den Eingängen E1 bzw. E2 der Vorrichtung 12. Im bevorzugten Ausführungsbeispiel der Ansteuerung eines Motors wird das dem Eingang E2 bzw. E1 zugeführte Signal durch Invertierung des auf die Leitung 22 bzw. 24 abgegebenen Signals gewonnen. Eine weitere Verbindungsleitung 26 verbindet den Mikrocomputer 10 mit dem Eingang D1 der Vorrichtung 12. Ferner verbindet eine Verbindungsleitung 28 den Ausgang FF der Vorrichtung 12 mit dem Mikrocomputer 10. Ferner kann ein zweiter Mikrocomputer 11 vorgesehen sein, der über die Leitung 27 mit dem Eingang D2 der Vorrichtung 12 verbunden ist. Dieser zweite Mikrocomputer hat im bevorzugten Ausführungsbeispiel andere Aufgaben (Bezineinspritzung und Zündung). Zu diesem Zweck sind ihm Eingangsleitungen 1000 bis 1002 von Meßeinrichtungen 1004 bis 1006 zugeführt. Die Mikrocomputer 10 und 11 tauschen über ein Bussystem 1008 Informationen und Steuergrößen aus.

Das in Figur 1 dargestellte, bevorzugte Ausführungsbeispiel der Vorrichtung 12, welche vorteilhaft als integriertes Bauteil ausgeführt ist, umfaßt eine Vollbrückenendstufe zur Ansteuerung eines elektromagnetischen Verbrauchers, welcher in der Diagonalen der Brückenschaltung angeordnet ist. Die dargestellte Brückenschaltung weist vier Schaltelemente 30, 32, 34, 36 auf, welche in bevorzugten Ausführungsbeispielen als MOS-Feldeffekttransistoren ausgeführt sind.

Dabei ist ein Anschlußpunkt des Schaltelements 30 ebenso wie ein Anschlußpunkt des Schaltelements 32 über die Leitung 38 bzw. 40 mit dem positiven Pol 42 der Betriebsspannung verbunden. Der zweite Anschlußpunkt des Schaltelements 30 ist über eine Verbindungsleitung 44 mit dem ersten Anschlußpunkt des Schaltelements 34 verknüpft, dessen anderer Anschlußpunkt wiederum über die Leitung 46 mit dem negativen Pol 48 der Betriebsspannung verbunden ist. In vergleichbarer Weise ist der zweite Anschlußpunkt des Schaltelements 32 über die Leitung 50 mit dem ersten Anschlußpunkt des Schaltelements 36 verknüpft, dessen anderer Anschlußpunkt über die Leitung 52 auf den negativen Pol 48 der Betriebsspannung geführt ist. Von der Verbindungsleitung 44 führt eine Leitung 54 über einen Stromerfassungswiderstand 55 zum Anschlußpunkt 56 der Vorrichtung 12, während eine Leitung 58 von der Leitung 50 zum zweiten Anschlußpunkt 60 der Vorrichtung 12 führt. Zwischen den Anschlußpunkten 56 und 60 ist der Verbraucher 62 angeordnet.

Bei dem Verbraucher handelt es sich im bevorzugten Ausführungsbeispiel um einen Gleichstrommotor, während in anderen Ausführungsbeispielen in ebenso vorteilhafter Weise der Verbraucher 62 die Wicklung eines Schrittmotors ist. Bei der Schrittmotoranwendung ist dabei für jede Phase eine Vorrichtung 12 vorgesehen, die jeweils in der gezeigten Weise mit den Mikrocomputern verbunden ist.

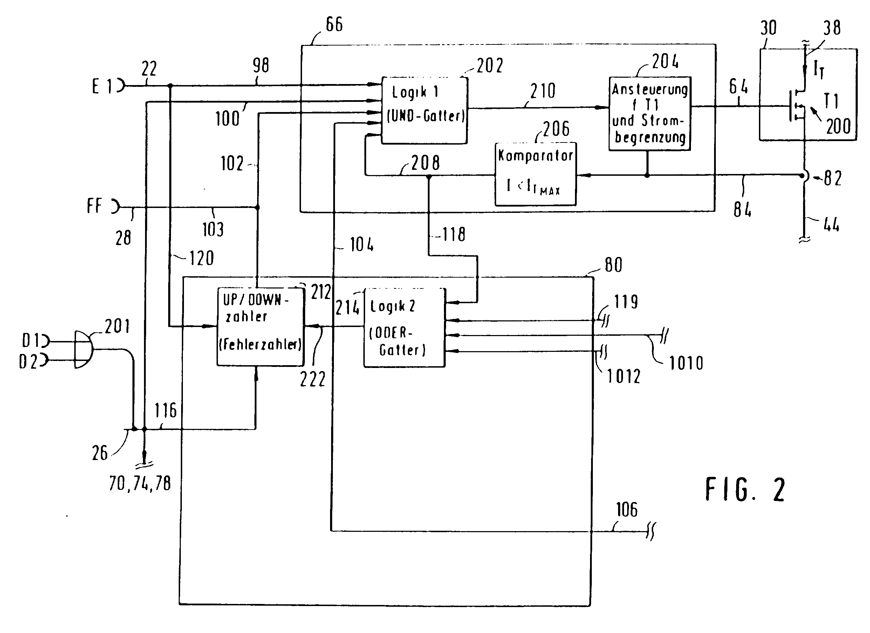

Jedem der Schaltelemente 30, 32, 34, 36 ist ein Ansteuerelement zu deren Betätigung zugeordnet, die mit den Steueranschlüssen der Schaltelemente verbunden sind. So verbindet die Leitung 64 das Ansteuerelement 66 mit dem Schaltelement 30, die Leitung 68 das Ansteuerelement 70 mit dem Schaltelement 34, die Leitung 72 das Ansteuerelement 74 mit dem Schaltelement 32 sowie die Leitung 76 das Ansteuerelement 78 mit dem Schaltelement 36. Der Aufbau der Ansteuerelemente wird nachfolgend anhand Figur 2 beschrieben.

Bei den Schaltelementen handelt es sich um sogenannten currentsense-MOS-Fets. Diese verfügen über einen Ausgang, über den ein den die Schaltelemente durchfliessenden Strom repräsentierendes Signal abgegeben wird. Diese Ausgangsleitungen sind auf das dem jeweiligen Schaltelement zugeordnete Ansteuerelement geführt. Die Meßleitung 84 ist vom Schaltelement 30 auf das Ansteuerelement 66 geführt, die Meßleitung 88 vom Schaltelement 32 auf das Ansteuerelement 74, die Meßleitung 92 vom Schaltelement 34 zum Ansteuerelement 70 und die Meßleitung 96 vom Schaltelement 36 zum Ansteuerelement 78.

Den Ansteuerelementen sind im in Fig. 1 dargestellten bevorzugten Beispiel zur Betätigung der jeweils zugeordneten Schaltelemente weitere Eingangsleitungen zugeführt. Das Ansteuerelement 66 ist über die Leitung 98 mit dem Eingang E1 der Vorrichtung 12 verbunden. Ferner führt vom Eingang E1 der Vorrichtung 12 bzw. von der Leitung 98 eine Leitung 110 über einen nichtdargestellten Inverter zum Ansteuerelement 70. Vom Eingang E2 führt eine Leitung 112 zum Ansteuerelement 74, während vom selben Eingang bzw. von der Leitung 112 ausgehend eine Leitung 114 über einen nicht dargestellten Inverter zum Ansteuerelement 78 führt.

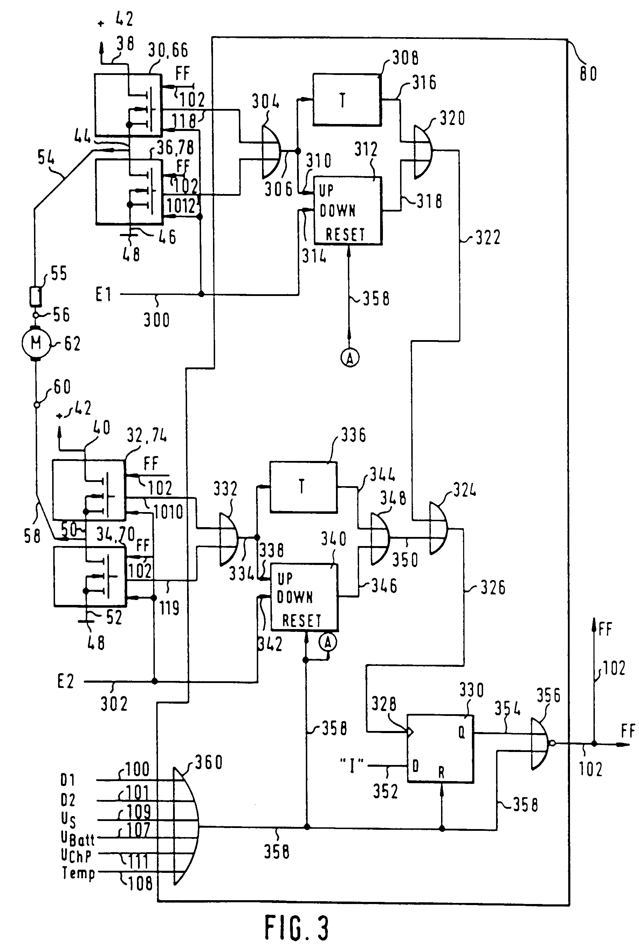

In einem anderen vorteilhaften Ausführungsbeispiel kann wie in Figur 3 skizziert in herkömmlicher Weise die Schaltelemente 30 und 36 mit E1, die Schaltelemente 32 und 34 mit E2 verbunden sein.

Ferner ist das Ansteuerelement 66 über eine Leitung 100 mit dem Eingang D1 der Vorrichtung 12 verbunden. In vergleichbarer Weise ist der Eingang D1, gegebenenfalls ausgehend von der Leitung 100, mit den anderen Ansteuerelementen 70, 74 und 78 verbunden, was in Fig. 1 mit dem gleichen Bezugszeichen verdeutlicht ist.

In einem bevorzugten Ausführungsbeipiel ist ein zweiter Mikrocomputer 11 vorhanden, welcher über den Eingang D2 der Vorrichtung 12, in gleicher Weise mit den Elementen der Vorrichtung 12 verbunden ist wie der Eingang D1 (siehe Leitung 101). Der Mikrocomputer hat aus Sicherheitsgründen die Möglichkeit, die Endstufe ab- und wiedereinzuschalten. Der Rechner 11 steuert dabei die Endstufe nicht an, bei ihm kann es z.B. um einen Rechner zur Steuerung von Benzineinspritzung und/oder Zündung handeln. Die Eingangssignale auf den Eingängen D1 und D2 sind in der Vorrichtung 12 logisch ODER-verknüpft.

Ein weiterer Bestandteil der Vorrichtung 12 bildet die Überwachungseinheit 80. Diese ist mehrfach mit den Ansteuerelementen verbunden, was in Fig. 1 aus Übersichtlichkeitsgründen nur skizzenhaft verdeutlicht ist.

Eine Leitung 102 (FF) verbindet die Überwachungseinheit 80 mit den Ansteuerelementen. Von der Leitung 102 führt ferner eine Leitung 103 zum Ausgang FF der Vorrichtung 12. Eine strichliert gezeichnete Verbindungsleitung 104 (FF2) verbindet in einem vorteilhaften Ausführungbeispiel die Überwachungseinheit 80 mit allen Ansteuerelementen.

Ferner verbinden die Leitungen 118 (I1), 119 (I2), 1010 (I3), 1012 (I4) die Überwachungeinheit 80 mit den Ansteuerelementen 66, 70, 74, 78.

Ferner ist der Überwachungseinheit 80 die Leitung 106 zugeführt. Diese verbindet die Einheit 80 mit einer Einheit 1014, die auch Bestandteil der Einheit 80 sein kann und weitere Fehlerüberwachungen ausführt. Der Einheit 1014 wird über die Leitung 107 ein Maß für die Betriebsspannung zugeführt, über eine Leitung 108 ein Maß für die Temperatur der Vorrichtung 12 (des Chips, des Substrats), über die Leitung 109 ein Maß für die Referenzspannung und über die Leitung 111 ein Maß für die Spannung der Ladungspumpe der Schaltelemente 30 und 32. In Vergleichelementen 1016, 1018, 1020, 1022 werden diese Werte mit Ober- und/oder Untergrenzen verglichen, die jeweiligen Ausgangssignale ODER-verknüft (Gatter 1024). Die Ausgangsleitung des Gatters 1024 ist die Leitung 106.

Leitungen 120 und 122 verbinden die Überwachungeinheit 80 den Eingängen E1 und E2, ferner ist die Einheit 80 mit den Eingängen D1 und D2 verknüpft (Leitungen 100, 101).

Die prinzipielle Funktionsweise der Anordnung in Figur 1 wird nachfolgend anhand des bevorzugten Anwendungsfalles einer elektronischen Motorleistungssteuerung zur Steuerung einer Drosselklappe einer Brennkraftmaschine dargestellt. Dabei ist der Motor 62 bzw. der mit der Wicklung 62 ausgestattete Schrittmotor mit der Drosselklappe verbunden. Der Mikrocomputer 10 ermittelt auf der Basis der ihm über die Eingangsleitungen 14 bis 16 von den Meßeinrichtungen 18 bis 20 zugeführten Betriebsgrößen, wie Fahrpedalstellung, Motordrehzahl, Motortemperatur, etc., ein Ansteuersignal für die Vorrichtung, welches über die Leitung 22 und 24 in Form eines pulsweitenmodulierten Impulssignales zugeführt wird. Ein Sollwert für das Ansteuersignal kann auch vom Mikrocomputer 11 geliefert werden, welches durch den Rechner 10 im Rahmen einer Lageregelung eingestellt wird.

Die Ansteuersignale sind dabei invers zueinander. Mit anderen Worten wird durch das an E1 anliegende Steuersignal entweder das Schaltelement 30 ein- , das Schaltelement 34 infolge des Inverters ausgeschaltet oder umgekehrt. In analoger Weise wird durch das am Eingang E2 anliegende Signal gleichzeitig das Schaltelement 32 aus- und durch den Inverter das Schaltelement 36 eingeschaltet. Dies erlaubt einen schnellen Stromauf- und -abbau und somit eine genaue Positionierung des Motors.

Für den Normalbetrieb lassen sich folgende Betriebszustände der Vorrichtung 12 angeben:

| D | E1 | E2 | Schaltelemente | | | | Wirkung |
|---|---|---|---|---|---|---|---|
| | | | 30 | 32 | 34 | 36 | |
| 0 | X | X | A | A | A | A | AUS |
| 1 | 0 | 0 | A | A | E | E | Freilauf |
| 1 | 0 | 1 | A | E | E | A | neg. Strom |
| 1 | 1 | 0 | E | A | A | E | pos. Strom |
| 1 | 1 | 1 | E | E | A | A | Freilauf |
| X (beliebig), 0,1 (log. Pegel), E (eingeschaltet), A (ausgeschaltet) | | | | | | | |

Die erfindungsgemäße Vorgehensweise zum Schutz und zur Überwachung der Vorrichtung 12 wird nachfolgend anhand von Figur 2 dargestellt. Figur 2 zeigt eine detailliertere Darstellung der Überwachungseinheit 80 sowie des Ansteuerelements 66. Sofern in Figur 2 dieselben Elemente wie in Figur 1 beschrieben werden, tragen diese dieselben Bezugszeichen und werden im folgenden nicht näher beschrieben.

Es ist ferner darauf hinzuweisen, daß die Ausgestaltung des Ansteuerelements 66 den Ausgestaltungen der in Fig. 2 aus Übersichtlichkeitsgründen nicht dargestellten Ansteuerelementen 70, 74 und 78 entspricht. Auf die Darstellung des Eingangs E2 wurde in Figur 2 ebenfalls aus Übersichtlichkeitsgründen verzichtet, da dieser im Zusammenhang mit der Darstellung am Schaltelement 30 keine Rolle spielt. Bezüglich der Schaltelemente 32 und 34 muß daher anstelle des Eingangs E1 der Eingang E2 entsprechend geschaltet werden.

Das Schaltelement 30 besteht in dem in Figur 2 gezeigten bevorzugten Ausführungsbeispiel aus einem MOS-Feldeffekttransistor 200, dessen Gate-Anschluß mit der Leitung 64 und dessen Source- bzw. Drain-Anschluß mit der Leitung 38 bzw. 44 verbunden ist. Im Meßelement 82 wird der Strom I_{T} durch den Transistor, beispielsweise durch ein widerstandsbehaftetes Bauelement, erfaßt und über die Leitung 84 zum Ansteuerelement 66 geführt. Alternativ kann in vorteilhafter Weise auch ein sogenannter "current-sense-Mosfet" als Transistor eingesetzt werden, der über einen Strommeßausgang verfügt.

Das Ansteuerelement 66 ist dabei im wesentlichen aus drei Elementen aufgebaut, einer Logikschaltung 202, einer Ansteuerschaltung 204 mit Strombegrenzung und gegebenenfalls Ladungspumpe sowie einem Komparator 206. Der Logikschaltung 202, welche im wesentlichen als UND-Gatter ausgeführt ist, werden die Leitungen 98 vom Eingang E1, die Leitung 100 von den im ODER-Gatter 201 zusammengeführten Eingängen D1 und D2, die Leitungen 102 und 104 von der Überwachungseinheit 80 sowie die Ausgangsleitung 208 des Komparators 206 zugeführt. Über eine Leitung 210 ist die Logikschaltung 202 mit der Ansteuerschaltung 204 verbunden, welcher ferner ebenso wie dem Komparator 206 die Leitung 84 zugeführt ist. Die Ausgangsleitung der Ansteuerschaltung 204 bildet die Leitung 64, welche das Ansteuerelement 66 mit dem Schaltelement 30 verbindet. Die Ausgangsleitung des Komparators 206 führt einerseits über die Leitung 208 zur Logikschaltung 202, ferner über die Leitung 118 zur überwachungseinheit 80.

Die Überwachungseinheit besteht im wesentlichen aus den folgenden Baueinheiten: Auf-/Abwärtszählmittel (Fehlerzähler) 212 und die Logikschaltung 214, welche im wesentlichen als ODER-Gatter ausgeführt ist.

Dem Zählmittel 212 wird die Leitung 120 vom Eingang E1 bzw. von der Leitung 98, die Leitung 116 vom Eingang D1/D2 bzw. von der Leitung 100 sowie die Leitung 222 von der Logikschaltung 214 zugeführt. Die Ausgangsleitung des Zählmittels 212 bzw. der Überwachungseinheit 80 bildet die Leitung 102, welche dem Ansteuerelement 66, dort der Logikschaltung 202, zugeführt ist. Von der Leitung 102 führt die Leitung 103 zum Ausgang FF der Vorrichtung 12.

Der Logikschaltung 214 wird die Leitung 118 vom Ansteuerelement 66 sowie entsprechende Leitungen 119, 1010 und 1012 von den Ansteuerelementen 70, 74 bzw. 78 zugeführt.

Die Leitung 106 führt als Leitung 104 von der Überwachungseinheit 80 zum Ansteuerelement 66.

Wie oben erwähnt ist das bevorzugte Ausführungsbeispiel gemäß Figur 2 lediglich im Zusammenhang mit dem Schaltelement 30 und dem Ansteuerelement 66 dargestellt. In vollständiger Darstellung werden die Leitungen 100, 102 und 104 nicht nur zum Ansteuerelement 66, sondern auch zu den anderen Ansteuerelementen 70, 74 und 78 geführt. Ferner wird der Überwachungseinheit 80 neben der Leitung 120 vom Eingang E1 bzw. der Leitung 98 in einem vorteilhaften Ausführungsbeispiel die Leitung 122 vom Eingang E2 bzw. der Leitung 112/114 zugeführt. Diese werden dem Zählmittel 212 beispielsweise über eine ODER-Verbindung mit der Leitung 120 zugeführt, um eine Gleichbewertung der Fehlerzustände bei positiver und negativer Bestromung des Verbrauchers 62 zu erreichen.

Im folgenden wird die Funktionsweise der Anordnung nach Figur 2 im fehlerfreien Betrieb beschrieben.

Der Mikrocomputer 10 erzeugt zueinander inverse impulsförmige Ansteuersignal, welche in einem Ausführungsbeispiel durch Invertierung aus einem Signal gebildet werden, und gibt diese auf die Leitungen 22 und 24 an die Eingänge E1 und E2 des Bauteils 12 ab. Im fehlerfreien Betrieb sind die an der Logikschaltung 202 anliegenden Signale dergestalt, daß das pulsweitenmodulierte Eingangssignal, welches über die Leitung 98 dem Ansteuerelement 66 zugeführt wird, auf die Leitung 210 weitergeführt wird. In der Ansteuerschaltung 204 wird das pulsweitenmodulierte Ansteuersignal, welches über die Leitung 210 zugeführt wird, zur Ansteuerung des Transistors aufbereitet. Beispielsweise umfaßt die Schaltung 204 eine Spannungsüberhöhungsschaltung (Ladungspumpe), welche das Ein- bzw. Ausschalten des Transistors sicherstellt. Der Transistor wird somit entsprechend dem pulsweitenmodulierten Ansteuersignal getaktet ein- bzw. ausgeschaltet. Invers und synchron dazu wird das Schaltelement 34 aus- bzw. eingeschaltet. Durch das Eingangssignal am Eingang E2 werden die Schaltelemente 32 und 36 wie oben dargestellt betätigt, so daß durch den Verbraucher 62 ein der Impulsbreite des pulsweitenmodulierten Signals entsprechender mittlerer Strom fließt, durch welchen die Positionierung bewerkstelligt wird.

Im Betrieb können verschiedene Fehlerarten auftreten. Besonders gefährlich sind Kurzschlüsse oder kurzschlußartige Fehlerzustände, welche beispielsweise als Kurzschluß im Verbraucher 62 oder einer der Zuleitungen zum Verbraucher 62 gegen Masse oder Betriebsspannung auftreten können. Ferner kann ein undefiniertes Verhalten des Verbrauchers bei Unterschreiten einer vorgegebenen Minimalschwelle durch die Betriebsspannung oder bei Überschreiten einer Maximalschwelle der Betriebs- und Referenzspannungen auftreten. Ferner können bei thermischer Belastung des Bauelements 12 ungewollte Betriebszustände auftreten.

Für die genannten Fehlerarten sind erfindungsgemäß im Bauelement 12 Schutzmechanismen vorgesehen.

Ausgangspunkt des Kurzschlußschutzes ist die Erfassung des Stroms durch die Schaltelemente. Dabei ist jedem Schaltelement ein Strommeßelement zugeordnet, im Beispiel der Figur 2 das Meßelement 82. Der erfaßte Strom wird einerseits zum Ansteuerelement 204 geführt, welches eine Strombegrenzungsschaltung aufweist (beispielsweise realisiert durch Dioden), welche das Ansteuersignal im Sinne einer Strombegrenzung auf einen vorgegebenen Maximalwert I_{Tmax} beeinflußt. Diese Maßnahme stellt eine schnelle Begrenzung des Stromes im Bereich von zwei bis fünf Mikrosekunden dar. Ferner wird der Strommeßwert dem Komparator 206 zugeführt, welcher den Strom mit einem vorgegebenen Maximalwert vergleicht. Überschreitet der Strom diesen Maximalwert, bzw. ist er diesem Maximalwert gleich (Strombegrenzung), so ändert der Komparator 206 an seinem Ausgang den Signalpegel. Dadurch verhindert die Logikschaltung 202, daß das über die Leitung 98 zugeführte Ansteuersignal auf die Leitung 210 gelangt.

Daraufhin wird vom Komparator 206 über die Leitung 118 und die Logikschaltung 214 der Fehlerzähler um 1 erhöht. Dieser langsamere Schaltungsteil führt somit zu einer Abschaltung des Transistors über die Logikschaltung 202.

In einem bevorzugten Ausführungsbeispiel sind die Maximalwerte der Strombegrenzungschaltung und des Komparators betragsmäßig verschieden, wobei der Maximalwert des Komparator kleiner als der der Strombegrenzung ist.

Durch Abschalten des Transistors sinkt der durch ihn fließende Strom, so daß das Komparatorausgangssignal seinen Pegel wieder wechselt. Dadurch wird es ermöglicht, daß beim nächsten Impuls des Ansteuersignals, welcher über die Leitung 98 auf die Logik 202 geführt wird, ein erneuter Einschaltversuch des Transistors durchgeführt wird. Ist der Kurzschluß weiterhin vorhanden, so wird gemäß den obigen Ausführungen der Transistor wieder abgeschaltet und der Zähler 212 um 1 erhöht. Erreicht der Fehlerzähler einen bestimmten Wert, beispielsweise 10, so wechselt er den Pegel auf seiner Ausgangsleitung 102, so daß einerseits der Transistor über die Logikschaltung 202 dauerhaft abgeschaltet wird, d.h., ein Impuls des Eingangssignals führt nicht zu einem Wiedereinschaltversuch des Schaltelements, andererseits über die Ausgangsleitung 103 und 28 eine Fehlermeldung an den Mikrocomputer übersandt wird. Bemerkenswert dabei ist, daß in diesem Fall über die Leitung 102 nicht nur das Schaltelement 30, sondern alle Schaltelemente abgeschaltet werden, während das Ausgangssignal des Komparators 206 lediglich die Abschaltung des diesem Komparator zugeordneten Schaltelements bewirkt.

Zusammenfassend ist festzustellen, daß nach Überschreiten von Imax durch den Strom den Transistor zunächst eine Strombegrenzung aktiviert wird und dann durch Verknüpfung des Ansteuersignals E1 bzw. E2 mit dem Stromkomparator der Fehlerzähler gesetzt wird.

Wird beim Ausschalten des Transistors erkannt, daß der Fehler nicht mehr vorhanden ist, so wird der Fehlerzähler 212, wenn sein Zählerstand größer Null ist, über die Leitung 120 durch den Impuls des Ansteuersignals um 1 zurückgesetzt. Dadurch wird vermieden, daß eine ungewollte Aufaddierung von "Einzel-Kurzschlüssen" über einen langen Zeitraum zur Abschaltung des Bauelements 12 führt.

In einem anderen vorteilhaften Ausführungsbeispiel wird der Fehlerzähler beim nächsten Wiedereinschaltversuch des Transistors, wenn kein Fehler mehr vorliegt und der Zählerstand größer Null ist, zurückgesetzt.

Der Logikschaltung 214 werden die Komparatorausgangsleitungen 119, 1010 und 1012 der anderen Schaltelemente der Vollbrückenendstufe zugeführt. Da die Logikschaltung 214 im wesentliche eine logische ODER-Funktion darstellt, führt jeder Einzelfehler an einem der Transistoren zur Beeinflussung des Fehlerzählers 212. Dies bedeutet, daß im Fehlerzähler die Fehlerzustände der Schaltelemente aufaddiert werden, d.h., daß jeder der vier Schaltelemente im Kurzschlußfall den Fehlerzähler erhöhen kann. Dies verbessert die Betriebssicherheit erheblich, da kritische Fehlerzustände z.B. im Bereich des Verbrauchers sehr schnell zu Reaktionen führen, ohne daß die Verfügbarkeit bei Einzelfehler eingeschränkt werden muß.

Ein Wiedereinschalten der Endstufe ist nur über den Eingang D1 oder D2 möglich, welche durch einen entsprechenden Flankenwechsel durch den Mikrocomputer 10 oder 11 den Fehlerzähler zurücksetzen und die Logikschaltung 202 wieder aktiviert. Dies kann beispielsweise dadurch geschehen, daß der Mikrocomputer die über den Ausgang FF zugeführte Fehlerinformation auswertet und dann nach vorgegebenen Kriterien entscheidet, ob das Bauelement 12 wieder eingeschaltet werden soll oder nicht.

Diese Vorgehensweise hat den Vorteil, daß kurze Störungen, z.B. durch Störstrahlung, nicht zum Abschalten der gesamten Endstufe führen.

Im bevorzugten Ausführungsbeispiel einer elektronischen Drosselklappensteuerung wird die Endstufe mit einer Frequenz von ca. 15 bis 25 kHz betrieben, so daß die Ein- und Ausschaltzeiten des pulsweitenmodulierten Signals sehr kurz werden können. Die vorgestellte Art des Kurzschlußschutzes ist für diese Umgebung geeignet. Ferner ermöglicht das beschriebene Verfahren auch die Erkennung von Kurzschlüssen, die nur im Ansteuerfall auftreten, wie z.B. ein Kurzschluß des Verbrauchers 62 nach Masse.

Ferner können weitere Schutzmechanismen vorgesehen sein.

Über die Leitung 108 wird der Einheit 1014 ein Temperatursignal zugeführt, welches die Temperatur des Bauelements 12 repräsentiert. Dieser thermische Schutz deckt den Fehlerfall ab, daß das pulsweitenmodulierte Signal die Schaltelemente 30 innerhalb einer Zeit kleiner als 2 bis 5 Mikrosekunden ansteuert, so daß der oben dargestellte Schutzmechanismus nicht ansprechen kann. Im Schaltkreis 1022 wird daher das über die Leitung 108 zugeführte Temperatursignal mit einem Schwellwert verglichen, so daß bei Übertemperatur ein entsprechender Signalwechsel folgt, welcher über das Gatter 1024, die Leitung 106 und die Leitung 104 zum Sperren der Logikschaltung 202 und zum Abschalten des Schaltelements 30 sowie der anderen vier Schaltelemente führt.

Um einen Betrieb der Anordnung bei Betriebsspannungen außerhalb eines vorgegebenen Bereichs zu vermeiden, wird über die Leitung 107 die Betriebsspannung dem Schaltkreis 1016 zugeführt, welcher die Betriebsspannung mit Minimal- bzw. Maximalschwellen vergleichen. Wird eine dieser Schwellen unter- bzw. überschritten, so wird über das Gatter 1024, die Leitung 106 und die Leitung 104 ein Sperren der Endstufe, d.h., ein Sperren der Ansteuerung des Schaltelements 30 sowie der anderen drei Schaltelemente, durchgeführt.

Dabei kann in einem vorteilhaften Ausführungsbeispiel bei Übertemperatur oder Über- oder Unterspannung der Fehlerzähler auf einen vorgegeben Wert gesetzt werden, der dem Mikrocomputer mitgeteilt eine Grundlage zur Wiedereinschaltung der Endstufe bilden kann, so daß dieser z.B. bei Übertemperatur die Endstufe nach einer vorgegebenen Zeit wiedereinschaltet.

Diese drei Schutzmechanismen können einzeln oder zusammen mit dem beschriebenen Kurzschlußschutz kombiniert werden. Ferner kann in analoger Weise die Spannung an der Ladungspumpe sowie die Logikreferenzspannung ausgewertet werden.

Besonders vorteilhaft ist ein integriertes Bauelement für eine Vollbrückenendstufe zur Ansteuerung eines elektrischen Motors, welches wenigstens über zwei Eingänge E1 und E2 sowie die den Eingang D1 oder D2 und den Ausgang FF zur Verbindung mit einem Mikrocomputer umfaßt und die dargestellten Schutzfunktionen enthält.

In einem bevorzugten Ausführungsbeispiel sind Maßnahmen vorgesehen, die zur einer Abschaltung der Stromversorgung der Endstufe durch den Mikrocomputer im Fehlerfall, wenn auf der Leitung 28 eine Fehlerinformation übermittelt wird, führen.

In Figur 3 ist im Rahmen einer zweiten bevorzugten Realisierung eine weitere Ausführungsform der erfindungsgemäßen Vorgehensweise dargestellt. Dabei wird das oben dargestellte zweite Ansteuerungsprinzip für die vier Schaltelemente angewendet, wobei durch das Ansteuersignal am Eingang E1 die Schaltelemente 30 und 36, über das Ansteuersignal des Eingangs E2 die Schaltelemente 32 und 34 betätigt werden. Dabei können die impulsförmigen Ansteuersignale am Eingang E1 und E2 zueinander invers sein. Die Invertierung des Eingangssignals am Eingang E1 kann dann sowohl vorzugsweise im Mikrocomputer 10 als auch durch entsprechende Vorrichtungen in der Vorrichtung 12 selbst durchgeführt werden. Die vorstehend beschriebene Invertierung beispielsweise des Signals vom Eingang E1 zur Ansteuerung des Schaltelements 34 entfällt.

Die in Figur 3 mit denselben Bezugszeichen wie in den Figuren 1 und 2 beschriebenen Elemente haben die gleiche Wirkungsweise wie dort dargestellt und werden im folgenden daher nicht näher beschrieben. Ferner ist zu erwähnen, daß in Figur 3 Schaltelement und Ansteuerelement aus Übersichtlichkeitsgründen in einem Element zusammengefaßt sind.

Die Eingangsleitung 300 vom Eingang E1 der nicht dargestellten Vorrichtung 12 führt auf das Ansteuer- und Schaltelement 33, 66, auf das Ansteuer- und Schaltelement 36, 78 sowie auf die Überwachungseinheit 80. Ebenso führt die Eingangsleitung 302 vom Eingang E2 zum Ansteuer- und Schaltelement 32, 74, zum Ansteuer- und Schaltelement 74, 70 sowie zur Überwachungseinheit 80. Wie in Figur 2 wird jedem Ansteuer-/ Schaltelement eine Fehlerleitung 102 zugeführt. Ferner wird von jedem Ansteuer-/Schaltelement eine Leitung zur Überwachungseinheit 80 geführt, welche ein Überschreiten des vorgegebenen Maximalstroms anzeigt. Dies sind die in Figur 1 angegebenen Leitungen 118, 119, 1010 sowie 1012.

Ferner weist die Überwachungseinheit 80 die Eingangsleitungen 100 und 101 von den Eingängen D1 und D2 auf, eine Eingangsleitung 107, auf der ein das Über- bzw. Unterschreiten von vorgegebenen Grenzwerten durch das die Batteriespannung repräsentierende Signal zugeführt wird, eine Leitung 108, welche ein Signal zuführt, das das Überschreiten einer vorgegebenen Chip-Temperatur anzeigt, eine Leitung 111, welche ein ein Unterschreiten der Spannung an der Ladungspumpe der Schaltelemente 30 und 32 anzeigendes Signal führt, sowie eine Leitung 109, auf welcher ein Signal zugeführt wird, welches das Unterschreiten eines vorgegebenen Grenzwerts durch die die Logikbauteile der Endstufe versorgende Referenzspannung anzeigt.

Das Prinzip des in Figur 3 dargestellten Ausführungsbeispiels der Überwachung beruht darauf, daß die beiden Halbbrücken (Schaltelemente 30 und 36 bzw. Schaltelemente 32 und 34) getrennt voneinander überwacht werden. Zu diesem Zweck wird die Leitung 118 und 1012 in der Überwachungseinheit 80 auf ein ODER-Gatter 304 geführt, dessen Ausgangsleitung 306 einmal einem Zeitglied 308, zum anderen dem inkrementierenden Eingang 310 eines Zählmittels 312 zugeführt wird. Dem Dekrementiereingang 314 des Zählmittels 312 wird die Leitung 300 vom Eingang E1 zugeführt. Die Ausgangsleitung 316 des Zeitglieds 308 sowie die Ausgangsleitung 318 des Zählmittels 312 sind auf ein weiteres ODER-Gatter 320 geführt, dessen Ausgangsleitung 322 auf ein drittes ODER-Gatter 324 führt. Dessen Ausgangsleitung 326 führt auf den Takteingang 328 eines D-Flip-Flops 330. Entsprechend führt bezüglich der zweiten Halbbrücke (Schaltelemente 32 und 34) die Leitung 1010 sowie 119 auf ein ODER-Gatter 332, dessen Ausgangsleitung auf ein Zeitglied 336 sowie auf den Inkrementiereingang 338 eines Zählmittels 340 führt. Dem Dekrementiereingang 342 des Zählmittels 340 ist die Leitung 302 vom Eingang E2 zugeführt. Die Ausgangsleitung 344 des Zeitglieds 336 sowie die Ausgangsleitung 346 des Zählmittels 340 führt auf ein ODER-Gatter 348, dessen Ausgangsleitung 350 wiederum auf das ODER-Gatter 324 führt. Dem D-Eingang des Flip-Flops 330 ist eine Leitung 352 zugeführt, welche auf logisch 1 festgeklemmt ist. Die am Ausgang Q des Flip-Flops 330 anbindende Ausgangsleitung 354 führt auf ein NOR-Gatter 356, dessen zweite Eingangsleitung 358 von einem weiteren ODER-Gatter 360 zugeführt ist. In dem ODER-Gatter 360 werden die Eingangsleitungen 100, 101, 107, 108, 109, 111 logisch miteinander verknüpft. Die Leitung 358 führt ferner auf die Rücksetz-Eingänge des Flip-Flops 330 sowie der Zählmittel 340 und 312. Die Ausgangsleitung des NOR-Gatters 356 bildet die Ausgangsleitung 102 der Überwachungseinheit 80, welche einerseits den Ansteuer-/Schaltelementen, andererseits dem Ausgang FF der Vorrichtung 12 zugeführt ist.

Die Funktionsweise der Anordnung nach Figur 3 ergibt sich wie folgt. Jedes Schaltelement ist vorzugsweise in Form eines current-sense-FET ausgeführt, und übermittelt über den entsprechenden Ausgang seines Ansteuerelements ein Überschreiten des intern vorgegebenen Maximalstroms. Somit wird jedes Schaltelement auf Überstrom überwacht. Übersteigt der Strom durch ein Schaltelement den eingegebenen Maximalwert, so wird ein entsprechendes Signal über die Leitungen 118, 1012, 1010 oder 119 an die Überwachungseinheit 80 übermittelt, dort über das entsprechende ODER-Gatter 304, 332 einmal zum Starten des Zeitglieds 308 bzw. 336, zum anderen zum Inkrementieren des Zählmittels 312 bzw. 340 geführt. Der Strom durch das Schaltelement wird dann im Ansteuerelement, wie anhand Figur 2 dargestellt, auf einen Maximalwert begrenzt. Wesentlich ist, daß jeder Halbbrücke nur ein Zeitglied und ein Zählmittel zugeordnet ist, so daß Überströme in Schaltelementen einer Halbbrücke jeweils einzeln als auch in Kombination zur Fehlerüberwachung herangezogen werden. Das Zeitglied 308 bzw. 336 erzeugt ein Ausgangssignal, wenn das Überstromsignal eines der Schaltelemente einer Halbbrücke oder beider Schaltelemente in ihrer zeitlichen Summe einen bestimmten Wert, beispielsweise 50 Mikrosekunden, übersteigt. Dieses Ausgangssignal wird über die Leitung 316 bzw. 344, das ODER-Gatter 320 bzw. 348, die Leitung 322 bzw. 350, das ODER-Gatter 324 sowie die Leitung 326 auf den Takteingang 328 des Fehler-Flip-Flops 330 geführt. Dort wird durch den Pegelwechsel am Eingang 328 ein Pegelwechsel am Ausgang Q erzeugt, was über die Leitung 354 und das NOR-Gatter 356 zu einem Pegelwechsel auf der Ausgangsleitung 102 und somit zum Setzen des Fehlerflags FF führt. Das Setzen des Fehlerflags FF führt zum Abschalten aller Schaltelemente über die Leitung 102 sowie zur Fehlermeldung über die Leitung 28 an den Mikrocomputer 10. Dabei werden die beiden Halbbrücken alternativ zueinander ausgewertet, so daß ein Fehler dann erkannt werden kann, wenn entweder ein Schaltelement einer Halbbrücke, beide Schaltelemente einer Halbbrücke oder in beiden Halbbrücken ein Schaltelement fehlerhaft ist. Ein Überstromfehlerzustand kann jedoch gemäß dieser Vorgehensweise nur dann erkannt werden, wenn die Periodendauer des getakteten Ansteuersignals größer ist als die in den Zeitgliedern 308 bzw. 336 vorgegebene Zeitdauer, da nach Abschluß der aktiven Phase des getakteten Ansteuersignals die entsprechenden Schaltelemente ausgeschaltet und somit die Überstromerkennung ausfällt. Um auch diesen Betriebszustand zu beherrschen, sind Zählmittel 312 und 340 vorgesehen, welche in bekannter Weise mit jedem erkannten Überstrom inkrementiert, mit jedem Ansteuerimpuls oder einer vorgegebenen Vielzahl von Ansteuerimpulsen dekrementiert werden, wenn kein Fehler vorliegt. Dabei können vorteilhafterweise die Ansteuerfrequenzen halbiert werden, so daß der Fehlerzähler nur bei jeder zweiten Periode dekrementiert wird. Überschreitet der Fehlerzählerinhalt den entsprechenden Grenzwert, so geben die Zählmittel über ihre Ausgangsleitungen entsprechende Signale ab, welche zum Setzen des Fehlerflags FF in der oben beschriebenen Art und Weise führen.

Durch die Zeitglieder wird die Fehlererkennung unabhängig vom Ansteuersignal durchgeführt. Selbst wenn an den Eingängen E1 oder E2 ständig ein Einschaltsignal für die Schaltelemente auftritt und während dieses Zustandes ein Kurzschluß auftritt, wird nach Ablauf der vorgegebenen Zeit die Endstufe abgeschaltet und das Fehlerflag gesetzt. Dabei ist die integrierte Endstufe derart ausgelegt, daß während der vorgegebenen Zeit von vorzugsweise 50 Mikrosekunden die Endstufe den auf Maximalstrom begrenzten Strom verträgt. Neben den beschriebenen Überwachungsmaßnahmen sind gemäß Figur 3 weitere Funktionen vorgesehen. Erstens kann die Endstufe über die Eingänge D1 und D2 abgeschaltet werden und über die Leitung 358 das Fehlerflag FF gesetzt werden. Zweitens kann ein Flankenwechsel auf den Leitungen 100 oder 101 im Fehlerfall zum Rücksetzen der Zähler und des Flip-Flops 330 führen und die Endstufe aktiviert werden.

Ferner sind weitere Überwachungsmaßnahmen vorgesehen, welche die Betriebsspannung, die Logik-Referenzspannung, die Ladungspumpenspannung sowie die Chip-Temperatur auf bestimmte Grenzwerte überwachen. Dies erfolgt in separaten Vergleichseinrichtungen, die aus Übersichtlichtkeitsgründen in Figur 3 nicht dargestellt sind. Die Betriebsspannung UBat wird auf einen unteren und gegebenenfalls oberen Grenzwert überwacht. Unterschreitet die Betriebsspannung diesen Grenzwert, so wird durch ein entsprechendes Signal auf der Leitung 107 über die Leitung 358 sowie den Rücksetzeingang des Flip-Flops 330 das Fehlerflag FF gesetzt. Ebenso wird die Logik-Referenzspannung US auf einen unteren Grenzwert überwacht. Unterschreitet die Referenzspannung diesen Grenzwert, so wird infolge eines entsprechenden Signals auf der Leitung 109 die Endstufe abgeschaltet. Die Überwachung der Ladungspumpenspannung auf einen unteren Grenzwert führt zum gleichen Ergebnis und hat wie die Überwachung der Betriebsspannung insbesondere im Einschaltvorgang eine große Bedeutung. Während des Einschaltvorgangs sinkt die Betriebsspannung unter den Grenzwert, während die Ladungspumpenspannung erst nach dem Einschalten von Null aus steigt, so daß auch diese unter einem Grenzwert liegt. Dadurch werden die entsprechenden Signale auf den Leitungen 107 und 109 erzeugt, was zu einem Rücksetzen der Zählmittel 312, 340 sowie des Flip-Flops 330 führt. Es wird somit ein definierter Ausgangszustand der Endstufe erreicht. Eine weitere Überwachung betrifft die Chip-Temperatur. Überschreitet sie einen bestimmten Wert, so wird die Endstufe auf die vorstehend beschriebene Weise abgeschaltet.

Neben den vorstehend beschriebenen Ausführungbeispielen können die beschriebenen Einzelüberwachungsmaßnahmen in beliebiger Kombination eingesetzt werden. Es kann also eine Endstufe vorgesehen sein, in welcher nur die Zeitgliedüberwachung oder nur die Fehlerzählerüberwachung vorgesehen ist, ferner kann es Endstufen geben, welche eine Halbbrückenüberwachung oder eine Einzelschaltelemente-Überwachung vornehmen. Ferner kann auf die Aktivierung der Endstufe über externe Eingänge verzichtet werden oder bezüglich der Überwachungen von Betriebsgrößen der Endstufe die geeigneten ausgewählt werden. Es kann auch jedem Schaltelement ein Zeitglied und/oder Fehlerzähler zugeordnet sein.

## Patentansprüche

1. Vorrichtung zum Betreiben eines Verbrauchers (62) in einem Fahrzeug,
- mit wenigstens zwei Schaltelementen (30, 32, 34, 36), welche durch wenigstens ein Ansteuersignal betätigt werden und den Stromfluß durch den Verbraucher (62) beeinflussen,
- mit einem Mikrocomputer (10, 11) zur Erzeugung des wenigstens einen Ansteuersignals,
- mit Mitteln (66, 70, 74, 78) zur Überwachung der Funktionsfähigkeit der Vorrichtung, wobei der Strom durch jedes Schaltelement (30, 32, 34, 36) erfaßt und jeweils einzeln auf das Erreichen bzw. Überschreiten eines vorgegebenen Wertes (Iₘₐₓ) überwacht wird,
dadurch gekennzeichnet, daß
- bei Erreichen bzw. Überschreiten des vorgegebenen Wertes (Iₘₐₓ) an wenigstens einem Schaltelement (30, 32, 34, 36) der Strom durch dieses Schaltelement (30, 32, 34, 36) auf einen Maximalwert begrenzt wird und erst bei Erreichen bzw. Überschreiten des vorgegebenen Wertes (Iₘₐₓ) für eine vorgegebene Zeitdauer (T) Abschaltmaßnahmen vorgenommen werden.

2. Vorrichtung nach Anspruch 1, dadurch gekennzeichnet, daß das Ansteuersignal ein pulsweitenmoduliertes Signal ist, das über Ansteuerelemente (66, 70, 74, 78) dem jeweiligen Schaltemelemt (30, 32, 34, 36) zugeführt wird.

3. Vorrichtung nach einem der vorhergehenden Ansprüche, dadurch gekennzeichnet, daß bei Überschreiten des durch das jeweilige Schaltelement fließenden Stroms (Iₘₐₓ) die Ansteuerelemente (66, 70, 74, 78) derart aufgebaut sind, daß eine interne Strombegrenzung (204) durch Beeinflussung des Ansteuersignals vorgenommen wird.

4. Vorrichtung nach einem der vorhergehenden Ansprüche, dadurch gekennzeichnet, daß bei Überschreiten eines Maximalwertes (Iₘₐₓ) durch den Strom durch ein Schaltelement (30, 32, 34, 36) ein Zählmittel (212, 312, 340) um 1 erhöht wird und/oder ein Zeitglied (308, 336) gestartet wird.

5. Vorrichtung nach einem der vorhergehenden Ansprüche, dadurch gekennzeichnet, daß bei erkanntem Fehlerzustand eines Schaltelements (30, 32, 34, 36) beim nächsten Ansteuerimpuls des Ansteuersignals das jeweilige Schaltelement (30, 32, 34, 36) wieder eingeschaltet wird.

6. Vorrichtung nach einem der vorhergehenden Ansprüche, dadurch gekennzeichnet, daß bei Nichtvorliegen eines Fehlerzustandes durch die Ansteuerimpulse das Zählmittel (212, 312, 340) um 1 erniedrigt wird.

7. Vorrichtung nach einem der vorhergehenden Ansprüche, dadurch gekennzeichnet, daß ein Fehlersignal (FF) erzeugt wird, wenn der Zählmittelstand einen vorbestimmten Wert überschreitet und/oder wenn eine vorgegebene Zeit (T) abgelaufen ist, was zu einem vollständigen Abschalten der Vorrichtung führt.

8. Vorrichtung nach einem der vorhergehenden Ansprüche, dadurch gekennzeichnet, daß ein Schutz (214, 36a) gegen Übertemperatur, Unterspannung bzw. Überspannung der Betriebsspannung und/oder der Logik-Referenzspannung, Unterspannung eine die Schaltememente (30, 32, 34, 36) ansteuernde Ladungspumpe vorgesehen ist.

9. Vorrichtung nach einem der vorhergehenden Ansprüche, dadurch gekennzeichnet, daß ein Wiedereinschalten der Vorrichtung durch den Mikrocomputer (10, 11) vorgesehen ist.

10. Vorrichtung nach einem der vorhergehenden Ansprüche, dadurch gekennzeichnet, daß eine Vollbrückenendstufe (12) vorgesehen ist, wobei jeder Halbbrücke ein Zeitglied (308, 336) und/oder ein Zählmittel (312, 340) zugeordnet ist und Fehler erkannt werden, wenn in einem oder in beiden Schaltelementen der Maximalstrom überschritten wird.

11. Vorrichtung nach einem der vorhergehenden Ansprüche, dadurch gekennzeichnet, daß der Fehler in einem rücksetzbaaren Fehlerspeicher (330) gespeichert wird, der vom Mikrocomputer (10, 11) zurückgesetzt werden kann.

12. Vorrichtung zum Betreiben eines Verbrauchers (62) in einem Fahrzeug,
- mit einer Vollbrückenendstufe (12) zur Ansteuerung eines elektrischen Motors (62) zur Betätigung eines Leistungsstellelements einer Brennkraftmaschine, wie eine Drosselklappe oder eine Einspritzpumpe,
- wobei die Endstufe wenigstens ein pulsweitenmoduliertes impulsförmiges Ansteuersignal von einem Mikrocomputer (10, 11) zugeführt wird,
- wobei der Strom durch jedes Schaltelement (30, 32, 34, 36) erfaßt und auf das Überschreiten eines vorgegebenen Wertes (Iₘₐₓ) überwacht wird,
dadurch gekennzeichnet, daß
- die Vorrichtung (12) ein integriertes Bauelement darstellt, welches wenigstens einen Ansteuereingang (E1, E2), einen enable/disable-Eingang (D1, D2), Anschlüsse für den elektrischen Motor (56, 60) und einen Ausgang (FF) für die Fehlerinformation aufweist und mit einem Mikrocomputer (10, 11) koppelbar ist,
- wobei bei Überschreiten eines vorgegebenen Wertes (Iₘₐₓ) durch den Strom durch wenigstens ein Schaltelement eine Begrenzung des Stromes durch dieses Schaltelement (30, 32, 34, 36) vorgenommen wird,
- wobei ein Abschalten des jeweiligen Schaltelements der Vollbrückenendstufe (12) vorgenommen wird, wenn der Strom den Maximalstrom (Iₘₐₓ) in diesem Schaltelement eine vorgegebene Zeit (T) lang überschreitet.

## Claims

1. Device for operating a load (62) in a vehicle,
- having at least two switching elements (30, 32, 34, 36) which are activated by means of at least one drive signal and which influence the flow of current through the load (62),
- having a mircocomputer (10, 11) for generating the at least one drive signal,
- having means (66, 70, 74, 78) for monitoring the operational capability of the device, the current through each switching element (30, 32, 34, 36) being sensed and being in each case monitored individually to determine whether a prescribed value (Iₘₐₓ) is reached or exceeded,
characterized in that
- when the prescribed value (Iₘₐₓ) is reached or exceeded at at least one switching element (30, 32, 34, 36), the current through this switching element (30, 32, 34, 36) is limited to a maximum value and switching-off measures are not performed until the prescribed value (Iₘₐₓ) is reached or exceeded for a prescribed time period (T).

2. Device according to Claim 1, characterized in that the drive signal is a pulse-width-modulated signal which is fed to the respective switching element (30, 32, 34, 36) via drive elements (66, 70, 74, 78).

3. Device according to one of the preceding claims, characterized in that the drive elements (66, 70, 74, 78) are designed in such a way that when the current (Iₘₐₓ) flowing through the respective switching element is exceeded internal current limitation (204) is performed by influencing the drive signal.

4. Device according to one of the preceding claims, characterized in that when a maximum value (Iₘₐₓ) is exceeded by the current through a switching element (30, 32, 34, 36), a counting means (212, 312, 340) is incremented by 1 and/or a timing element (308, 336) is started.

5. Device according to one of the preceding claims, characterized in that when a error state of a switching element (30, 32, 34, 36) is detected, the respective switching element (30, 32, 34, 36) is switched on again at the next drive pulse of the drive signal.

6. Device according to one of the preceding claims, characterized in that when a error state is not present, the counting means (212, 312, 340) is decremented by 1 by the drive pulses.

7. Device according to one of the preceding claims, characterized in that a error signal (FF) is generated if the reading of the counting means exceeds a predetermined value and/or if a prescribed time (T) has expired, which leads to complete switching off of the device.

8. Device according to one of the preceding claims, characterized in that a charge pump which drives the switching elements (30, 32, 34, 36) is provided as protection (214, 36a) against overtemperature, undervoltage or overvoltage of the operating voltage and/or of the logic reference voltage, undervoltage.

9. Device according to one of the preceding claims, characterized in that there is provision for the device to be reactivated by means of the microcomputer (10, 11).

10. Device according to one of the preceding claims, characterized in that a full-bridge output stage (12) is provided, a timing element (308, 336) and/or a counting means (312, 340) being assigned to each half bridge, and errors being detected if the maximum current is exceeded in one switching element or in both switching elements.

11. Device according to one of the preceding claims, characterized in that the error is stored in a resettable error memory (330) which can be reset by the microcomputer (10, 11).

12. Device for operating a load (62) in a vehicle,
- having a full-bridge output stage (12) for driving an electric motor (62) for actuating a power controller of an internal combustion engine, such as a throttle valve or an injection pump,
- the output stage being fed at least one pulse-width-modulated, pulse-shaped drive signal by a microcomputer (10, 11),
- the current through each switching element (30, 32, 34, 36) being sensed and being monitored to determine whether a prescribed value (Iₘₐₓ) is exceeded,
characterized in that
- the device (12) constitutes an integrated component which has at least one drive input (E1, E2), an enable/disable input (D1, D2), terminals for the electric motor (56, 60) and an output (FF) for the error information and can be connected to a microcomputer (10, 11),
- at least one switching element limiting the current through this switching element (30, 32, 34, 36) when the current exceeds a prescribed value (Iₘₐₓ),
- the respective switching element of the full-bridge output stage (12) being switched off if the current exceeds the maximum current (Iₘₐₓ) in this switching element for a prescribed time (T).

## Revendications

1. Dispositif de mise en oeuvre d'un utilisateur de courant (62) d'un véhicule automobile comprenant
- au moins deux éléments de commutation (30, 32, 34, 36) actionnés par au moins un signal de commande et dont le courant est influencé par l'utilisateur (62),
- un micro-ordinateur (10, 11) générant au moins un signal de commande,
- des moyens (66, 70, 74, 78) pour surveiller l'aptitude au fonctionnement du dispositif, pour détecter l'intensité du courant à travers chaque élément de commutation (30, 32, 34, 36) et surveiller séparément que l'on atteint ou dépasse une valeur prédéterminée (Iₘₐₓ),
caractérisé en ce que
lorsqu'on atteint ou dépasse la valeur prédéterminée (Iₘₐₓ) sur au moins un élément de commutation (30, 32, 34, 36), on limite l'intensité dans cet élément de commutation (30, 32, 34, 36) à une valeur maximale et ce n'est que lorsqu'on atteint ou dépasse la valeur prédéterminée (Iₘₐₓ) pendant une durée prédéterminée (T), que l'on prend des mesures de coupure.

2. Dispositif selon la revendication 1,
caractérisé en ce que
le signal de commande est un signal à durée d'impulsion modulée, appliqué par les éléments de commande (66, 70, 74, 78) à l'élément de commutation respectif (30, 32, 34, 36).

3. Dispositif selon l'une des revendications précédentes,
caractérisé en ce qu'
en cas de dépassement de l'intensité (Iₘₐₓ) traversant chaque élément de commutation, les éléments de commande (66, 70, 74, 78) sont réalisés pour assurer une limitation interne du courant (204) en influençant le signal de commande.

4. Dispositif selon l'une des revendications précédentes,
caractérisé en ce qu'
en cas de dépassement d'une valeur maximale (Iₘₐₓ) par l'intensité traversant un élément de commutation (30, 32, 34, 36), un moyen de comptage (212, 312, 340) est augmenté d'une unité et/ou on un élément de temporisation (308, 336) est démarré.

5. Dispositif selon l'une des revendications précédentes,
caractérisé en ce qu'
en cas de reconnaissance d'un état de défaut d'un élément de commutation (30, 32, 34, 36), lors de l'impulsion de commande suivante du signal de commande, on branche de nouveau l'élément de commutation respectif (30, 32, 34, 36).

6. Dispositif selon l'une quelconque des revendications précédentes,
caractérisé en ce qu'
en l'absence d'un état de défaut, l'impulsion de commande abaisse le moyen de comptage d'une unité (212, 312, 340).

7. Dispositif selon l'une quelconque des revendications précédentes,
caractérisé en ce qu'
on génère un signal de défaut (FF) lorsque l'état du moyen de comptage dépasse une valeur prédéterminée et/ou à la fin d'une durée prédéterminée (T), ce qui conduit à une coupure complète du dispositif.

8. Dispositif selon l'une quelconque des revendications précédentes,
caractérisé par
un moyen de protection (214, 36a) contre une température excessive, une sous tension ou une surtension de la tension de fonctionnement et/ou de la tension de référence de la logique, une sous tension de l'un des éléments de commutation (30, 32, 34, 36) commandant la pompe de charge.

9. Dispositif selon l'une quelconque des revendications précédentes,
caractérisé en ce que
le micro-ordinateur (10, 11) branche de nouveau le dispositif.

10. Dispositif selon l'une quelconque des revendications précédentes,
caractérisé par
un étage en pont complet (12) dont chaque demi-pont comporte un élément de temporisation (308, 336) et/ou un moyen de comptage (312, 340), cet étage détectant les défauts lorsque l'intensité maximale est dépassée dans l'un ou dans les deux éléments de commutation.

11. Dispositif selon l'une des revendications précédentes,
caractérisé en ce que
le défaut est mis en mémoire dans une mémoire de défaut (330) susceptible d'être remise à l'état initial, cette remise à l'état initial pouvant être faite par le micro-ordinateur (10, 11).

12. Dispositif pour la mise en oeuvre d'un utilisateur (62) d'un véhicule, comprenant
- un étage en pont complet (12) pour commander un moteur électrique (62) et actionner un élément de réglage de la puissance d'un moteur à combustion interne, ainsi qu'un volet d'étranglement ou une pompe d'injection,
- l'étage de puissance reçoit au moins un signal de commande impulsionnel à durée d'impulsion modulée fourni par un micro-ordinateur (10, 11),
- et le courant dans chaque élément de commutation (30, 32, 34, 36) est détecté et surveillé quant au dépassement d'une valeur prédéterminée (Iₘₐₓ),
caractérisé en ce que
- le dispositif (12) est au moins un composant intégré avec au moins une entrée de commande (E1, E2), une entrée autorisation/interdiction (D1, D2), des branchements pour le moteur électrique (56, 60), et une sortie (FF) pour l'information de défaut, ainsi qu'un micro-ordinateur (10, 11),
- en cas de dépassement d'une valeur prédéterminée (Iₘₐₓ) par l'intensité traversant au moins l'un des éléments de commutation, on limite l'intensité par cet élément de commutation (30, 32, 34, 36),
- on coupe l'élément de commutation respectif de l'étage en pont complet (12) si le courant dépasse l'intensité maximale (Iₘₐₓ) dans cet élément de commutation pendant une durée prédéterminée (T).
